# EUROPEAN PATENT APPLICATION

(11) **EP 2 093 771 A1**
(43) Date of publication of application: **26.08.2009**
(21) Application number: 08151707.0
(22) Date of filing: 20.02.2008
(51) Int. Cl.: G21C 9/02, H01H 37/76

(54) **Temperature sensitive safety device for systems susceptible of overheating**

(71) Applicant: The European Atomic Energy Community (EURATOM), represented by the European Commission, 1049 Brussels (BE)
(72) Inventor: Carlsson, Johan, 1817 GK, Alkmaar (NL); Wider, Hartmut, 1861 JE, BERGEN (NL)
(74) Representative: Office Freylinger

(57) **Abstract**

A temperature sensitive safety device (10) comprises a hollow housing (18); two electric conductors (20, 20') guided through the housing (18); and a fusible body (22) arranged inside the hollow housing (18). The fusible body (22) is associated with the electric conductors (20, 20') and is designed to normally provide an electrical connection between the electric conductors (20, 20') in the housing (18), and, in response to an increase of temperature above a predetermined threshold temperature, break the electrical connection between the two electric conductors (20, 20'). According to an important aspect of the invention, the temperature sensitive safety device (10) further comprises a heat collecting structure (24) for transmitting heat from a medium to be monitored to the fusible body (22). The heat collecting structure (24) comprises:
a first layer (26) arranged at least partially outside the hollow housing (18) so as to be in contact with the medium to be monitored; the first layer (26) being of a first material having high thermal conductivity;
a second layer (28) arranged inside the hollow housing (18) ; the second layer (28) being of a second material being electrically insulating and having high thermal conductivity; and
a third layer (30) arranged inside the hollow housing (18) and carrying the fusible body (22); the third layer (30) being of a third material having high thermal conductivity.

## Description

### FIELD OF THE INVENTION

The present invention generally relates to a temperature sensitive safety device for systems susceptible of overheating. It is e.g. suitable for use in nuclear reactors like Light Water Reactors (LWRs), Liquid Metal Cooled Reactors (LMRs), and Gas-Cooled Reactors. The device according to the invention may however also be used in many other systems susceptible of overheating.

### BACKGROUND OF THE INVENTION

In nuclear reactors the control rods can be held up by electromagnets. By cutting the electrical circuit, the electromagnets release the control rods and shut the reactor down. This is necessary in cases of accidental overheating of the coolant or a reactivity insertion leading to a power increase and also leading to overheating.

In an accelerator-driven nuclear system (ADS), an accelerated particle beam (e.g. proton beam) is guided in a beam pipe and directed onto a nuclear fuel target through a vessel at least partially filled with a coolant.

It is well known that, in case of cooling disturbances and also reactivity accidents in an ADS, the only means of reducing the power to safe levels is to switch off the accelerator or interrupt the particle beam.

For releasing control rods or switching off the accelerator of an ADS, active and also complex passive safety systems have been suggested. Active systems will e.g. rely on temperature measurements leading to alarms in the control room when too high values are detected. Complex active systems will e.g. rely on a computer logic that will lead to an automatic release of the control rods or shut-off of the accelerator when a certain percentage of thermocouple readings are too high.

Such active systems have already been proposed and used, generally for liquid cooled reactors, such as e.g. liquid metal fast reactors (LMFR).

US-A1-2003/0035505 and EP 0 973 172 describe three types of passive devices that lead to a flooding of the proton guide pipe. The devices described therein have the disadvantage that the part of the beam pipe close to the proton source may be destroyed and, if the beam is not shut-off eventually, the reactor vessel may experience a creep failure.

Another passive system that has been proposed is the so-called lithium injection module (LIM) in which 95% enriched lithium is injected into a chamber inside the reactor core after a seal has melted. The drawback of this system however is that the reaction time is long.

For sodium-cooled nuclear reactors, permanent magnets with an iron core have been proposed to hold safety rods of absorber material. When the sodium coolant temperature becomes higher than the Curie point (770°C for iron), the iron de-magnetizes and the safety rods are released. A disadvantage of this invention is that the magnets are placed at a long distance from the core, which leads to long heat-up times and hence to a slow response to overheating.

Another passive device for LMRs is the so-called gas expansion module (GEM). It consists of an assembly of liquid metal with a gas space above it and capped at the top. When the coolant pumps stop, the inlet pressure decreases and the pressure above the coolant column pushes the liquid metal down. This leads to an increased leakage of the core, and thus, shutdown. For reactivity accidents it is not effective due to too long reaction times.

Another passive system has been proposed in EP 1 603 146, which discloses a temperature sensitive safety device comprising a hollow housing and two electric conductors guided through the housing. A temperature sensitive means is associated with the electric conductors and designed to normally provide an electrical connection between these electric conductors inside the housing, and, in response to an increase of temperature surrounding the device above a threshold temperature, break the electrical connection between the two electric conductors. The electric conductors normally establish a serial electrical circuit to the control rods. The housing is designed so as to concentrate thermal radiations transmitted through the housing in a predetermined region of the housing where the temperature sensitive means are located.

The system described in EP 1 603 146 works well in liquid-cooled reactors. However, in gas-cooled reactors, the heat transfer from the coolant to the temperature sensitive means of the safety device is too low and the response time of the safety device is too long for fast and safe passive shutdown of the reactor. Also in liquid or water-cooled reactors, this device does not respond fast enough.

### OBJECTIVE OF THE INVENTION

The objective of the present invention is to provide an improved safety device that is adapted for use in nuclear reactors or other types of systems susceptible of overheating such as internal combustion engines, electrical engines and appliances or industrial machines or installations. This objective is achieved by a temperature sensitive safety device as claimed in claim 1. The invention also concerns the use of such a device as claimed in claims 17 to 19.

### SUMMARY OF THE INVENTION

The present invention proposes a temperature sensitive safety device comprising a hollow housing; two electric conductors guided through the housing; and a fusible body arranged inside the hollow housing, the fusible body being associated with the electric conductors and designed to normally provide an electrical connection between the electric conductors in the housing, and, in response to an increase of temperature above a predetermined threshold temperature, break the electrical connection between the two electric conductors. According to an important aspect of the invention, the temperature sensitive safety device further comprises a heat collecting structure for transmitting heat from a medium to be monitored to the fusible body, the heat collecting structure comprising:
a first layer arranged at least partially outside the hollow housing so as to be in contact with the medium to be monitored; the first layer being of a first material having high thermal conductivity;
a second layer arranged inside the hollow housing; the second layer being of a second material being electrically insulating and having high thermal conductivity;
a third layer arranged inside the hollow housing and carrying the fusible body; the third layer being of a third material having high thermal conductivity.

The temperature sensitive safety device of this invention comprises a heat conducting device with a fusible body that breaks when heated up and two electric conductors guided through the fusible body, which are separated when the fusible body breaks. The fusible body is designed to normally electrically connect these electric conductors with each other. In response to an increase of temperature in the flowing or stagnant medium outside the wall, the fusible body heats up above a threshold temperature and breaks the electrical connection between the two electric conductors.

The temperature sensitive safety device of this invention comprises three layers of materials with the following properties: a first layer with a thermally well conducting material having a high melting point (for nuclear applications with low neutron absorption); a second layer with a thermally well conducting and electrically insulating material having a high melting point (for nuclear applications with low neutron absorption) and a third layer with a thermally well conducting material having a high melting point (for nuclear applications with low neutron absorption). The fusible body attached to the third layer should also have high thermal and electrical conductivity and low neutron absorption for nuclear applications. The fusible body is designed to normally electrically connect the electric conductors with each other, thereby establishing an electrical circuit. As the fusible body breaks, the electrical circuit is also broken.

In practice, the safety device will be serially connected in a power supply line of an electrically powered device. As the predetermined threshold temperature of the fusible body is exceeded, the power supply line is interrupted. In nuclear applications, this interruption of the power supply line may result in the electromagnets holding the scram control rods being released. Typically, such a safety device is placed immediately downstream of the heat source, i.e. for a nuclear reactor immediately above the core. This new temperature sensitive device can even be arranged inside the fuel pins placed above the uppermost fuel pellets and below reflector elements. In the case of sub-critical reactors the safety device will be serially connected to the accelerator beam.

The first, second and third layers need a high thermal conductivity in order to transfer heat well and its mass is preferably kept low in order to ensure rapid heat up, i.e. they should have high thermal diffusity.

The heat collecting structure of the present invention ensures a rapid heat transfer from the medium to the fusible body, thereby allowing the safety device to react quickly to a change in coolant temperature. In particular, the present system responds faster than the system described in EP 1 603 146, not only in gas-cooled reactors, but also in liquid or water-cooled reactors.

Preferably, the distance between the fusible body and the coolant is kept as short as possible to achieve fast response by thermal conduction.

Preferably, the first, second and/or third material have a melting point above the predetermined threshold temperature, and preferably considerably higher than the service temperature of the device itself. This ensures that the heat collection structure does not melt before the fusible body does.

The first and/or third material may be chosen from the group comprising: aluminium, aluminum alloy, beryllium, beryllium oxide, silver, silver alloy, magnesium oxide, silicon carbide steel, Mo92, Ti, Ni, Zr, Cr. For monitored mediums that are liquids at lower service temperatures, e.g. for application in engines, test industrial applications etc., aluminium or its alloys (melting point in the range of 500 to 600°C) or silver and its alloys (melting point 600-1000°C) are preferred, due to their high thermal diffusivity and good workability. For higher temperatures, e.g. in gas-cooled reactors beryllium or steel (melting point about 1400°C) are the preferred materials for the first and third layers. The advantage of steel is its ease of fabrication. In such a case involving applications in the nuclear field, the steel should preferably be free of molybdenum and niobium as they absorb neutrons.

The third material is preferably identical to the first material. The second material may be chosen from the group comprising: diamond, beryllium oxide. These have high thermal conductivity but low electrical conductivity.

According to a preferred embodiment, the first layer comprises a plurality of fins extending into the medium to be monitored. Such fins increase the surface area facing the monitored medium, thereby improving the heat pickup from the medium and ensuring a quick transfer of the heat to the fusible body. This is of particular importance if the monitored medium is a stagnant liquid or a gas. If, however, the monitored medium is a running liquid, the use of fins is not as important because, in such a medium, heat transfer is generally sufficiently good.

The fusible body is preferably made of a material that melts when the predetermined threshold temperature is reached. As soon as the temperature of the fusible body reaches its melting temperature through thermal conduction, the fusible body breaks and thus breaks the electrical connection.

The fusible body can be made of a material that comprises a mild explosive material that blows up at the predetermined threshold temperature.

Advantageously, the fusible body is made of an electrically conductive material bridging the ends of the two electrical conductors.

According to an embodiment of the invention, a first of the two electric conductors is joined to the heat collecting structure by the fusible body; and a second of the two electric conductors is joined to a support element arranged at a distance from the heat collecting structure, the second electric conductor being connected to the first conductor via a piece of electric wire.

The support element preferably comprises a first layer holding the second electric conductor and the piece of electric wire, the first layer being of a thermally insulating, fourth material, such as e.g. Hi-Por (highly porous cast engineering material) or aluminumoxide; and a second layer connected to an interior wall of the hollow housing, the second layer being of an electrically insulating, fifth material, such as diamond or beryllium oxide.

The safety device can further comprise biasing means that tend to discontinue the electrical connection between the electrical conductors. Such biasing means can be a weight or a spring connected to the second electric conductor or to the piece of electric conductor. Such a biasing means ensures the discontinuation of the electrical connection between the electrical conductors as soon as the fusible body reaches the predetermined threshold temperature. For example, the spring may be connected at one end to one of the electrical connections, close to where the fusible is positioned, and at the other end to the housing wall. The spring extension, in the regular operating state, should be more than half the distance of the housing. This ensures a long enough rupture of the wire and warrants interruption of the electrical current. For applications in the nuclear field, such a spring or weight is preferably coated with a strong neutron absorber material. Both the spring and the weight should have low thermal conduction so that excessive heat is not lost. Moreover, their electrical conductivity should be low.

Preferably, the housing is made of a material having a melting temperature above the predetermined threshold temperature and substantially above the desired service temperature of the safety device. The housing can be made of metal, metal alloy or ceramics having a high thermal diffusivity. As an example, the housing can be made from a material selected from the group comprising: aluminium, aluminium alloy, beryllium, steel, silver, silver alloy, steel, beryllium oxide, magnesium oxide and silicon carbide; the beryllium oxide, magnesium oxide and silicon carbide being optionally strengthened by carbon fibres.

The present safety device can be mounted on walls where the medium's temperature should be checked. A practical minimum space of the device is about 5 mm, a larger size is however possible when the surrounding geometry allows this. The wall can be of different shapes, e.g. flat or cylindrical, as long as there is enough space to mount the safety device. For instance, applications in nuclear reactors with cylindrical fuel pins, the shape of this safety device will preferably be cylindrical with the same outer diameter as for the fuel pins themselves. This allows minimizing flow obstructions and facilitating incorporation in the core design.

Advantageously, the housing is sealed to prevent any entry of surrounding medium. Preferably, the safety device further comprises leak-detecting means for detecting a leak of medium to be monitored into the housing, as such a leak may disturb the operation of the device. This is especially needed for all non-gas coolants.

The present invention also concerns the use of a temperature sensitive device in a nuclear reactor, wherein the safety device is serially connected to an electric power supply of the electromagnets holding the control rods. It further concerns the use of a temperature sensitive safety device in an accelerator driven nuclear system, the safety device being connected in a power supply circuit of a particle beam source and placed at the outlet of the core. It also concerns the use of a temperature sensitive safety device as a temperature sensitive fuse, an internal combustion engine, an electrical engine or appliance, an industrial machine or installation.

### BRIEF DESCRIPTION OF THE DRAWINGS

The present invention will now be described, by way of example, with reference to the accompanying drawings, in which:
- FIG. 1:: is a schematic vertical section view of a thermally sensitive safety device according to a first embodiment of the present invention;
- FIG. 2:: is a schematic horizontal section view of the thermally sensitive safety device of Fig.1;
- FIG. 3:: is a schematic vertical section view of a thermally sensitive safety device according to a second embodiment of the present invention;
- FIG. 4:: is a schematic horizontal section view of the thermally sensitive safety device of Fig.3;
- FIG. 5:: is a graph showing the temperature of the fusible body according to a first example;
- FIG. 6:: is a graph showing the temperature of the fusible body according to a second example; and
- FIG. 7:: is a graph showing the temperature of the fusible body according to a third example.

### DETAILED DESCRIPTION OF PREFERRED EMBODIMENTS

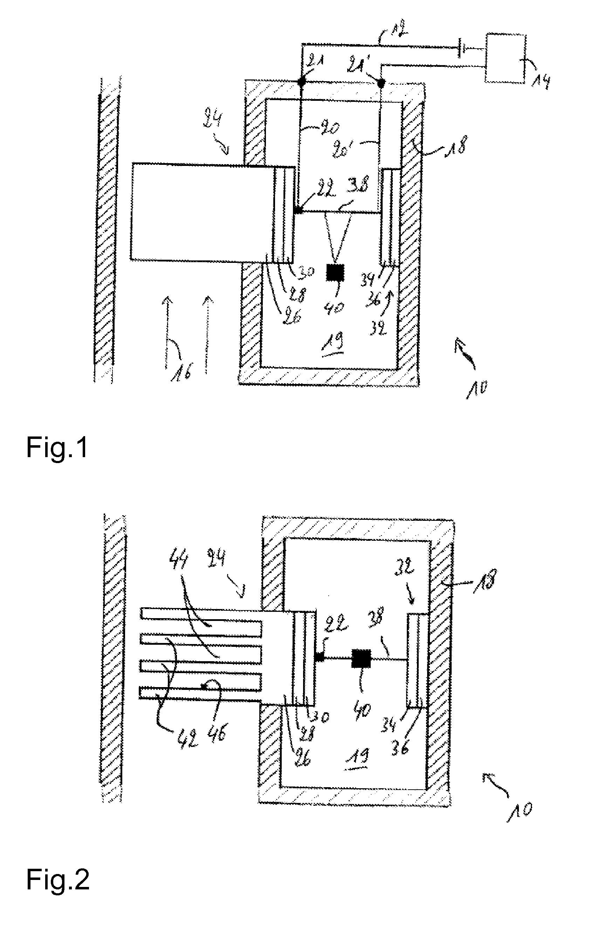

A first preferred embodiment of a temperature sensitive safety device 10 in accordance with the present invention is schematically illustrated in Fig.1 and Fig.2. Both Figures show a temperature sensitive safety device 10 which is serially connected to a power supply line 12 of an electrically powered device 14, such as e.g. an emergency shutdown control system of a nuclear reactor or a proton accelerator of an accelerator driven nuclear system (not shown). The safety device 10 is also arranged in a stream of coolant fluid (represented by arrows 16) that cools down the reactor core (not shown) of the nuclear reactor, in order to interrupt the power supply 14 in case the temperature of the coolant fluid 16 rises above a predetermined threshold temperature.

The safety device 10 comprises a hollow housing 18 with a chamber 19 and two electrical conductors 20 and 20' that are guided through the housing 18. The electrical conductors preferably take the form of two electrical wires 20, 20' that are guided through the housing 18 so as to be insulated from each other and from the housing 18 itself. The outer ends of the wires (indicated 21, 21' in Fig.1) are connected to the power supply line 12.

The device 10 further comprises a fusible body 22 associated with the wires 20, 20' and designed to normally electrically connect wires 20 and 20' with each other in the housing 18, and, in response to an increase of temperature above a threshold temperature, sever the electrical connection between the two wires 20 and 20'. As will be explained below, the fusible body 22 comprises a fusible material that melts at a threshold temperature to permit the interruption of the electrical connection between wires 20 and 20'.

The fusible body 22 is connected to a heat collecting structure 24 for collecting heat from the coolant fluid 16 and transferring this heat to the fusible body 22. The heat collecting structure 24 is a multilayer structure comprising a first layer 26, a second layer 28 and a third layer 30.

The first layer 26 is arranged at least partially outside the housing 18 so as to be in contact with the coolant fluid 16 to be monitored. The first layer 26 is made of a first material having high thermal conductivity. Furthermore, the first material is a material with a high melting point and, for nuclear applications, with low neutron absorption.

The second layer 28 is arranged inside the housing 18 and is made of a second material being electrically insulating and having high thermal conductivity. Furthermore, the second material is a material with a high melting point and, for nuclear applications, with low neutron absorption. The second material may e.g. comprise diamond or beryllium oxide.

The third layer 30 is arranged inside the housing 18 and carries the fusible body 22. The third layer 30 is made of a third material having high thermal conductivity. Furthermore, the third material is a material with a high melting point and, for nuclear applications, with low neutron absorption. Preferably, the third layer is of the same material as the first layer.

Due to the high thermal conductivity of the first, second and third layers 26, 28, 30, heat from the coolant fluid 16 to be monitored can quickly be transferred to the fusible body 22. The fusible body 22 connected to the third layer 30 of the heat collecting structure 24 has a melting point corresponding to the threshold temperature at which the safety device is to be triggered. The first wire 20 is joined to the heat collecting structure 24 by this fusible body 22.

The second wire 20' is joined to a support element 32 attached to a wall portion of the hollow housing 18 opposite the heat collecting structure 24. Such a support element 32 can be a multilayer structure comprising a first layer 34 and a second layer 36, wherein the first layer 34 of the support element 32 is made of a thermally insulating, fourth material; and wherein the second layer 36 of the support structure 32 is made of an electrically insulating, fifth material.

An electrical connection between the ends of the two wires 20 and 20' is provided by a piece of wire 38 with good electrical conductivity that extends between the fusible body 22 and the end of the second wire 20'.

When the fusible body 22 is heated, via the heat collecting structure 24, to the threshold temperature, and thus to its melting temperature, the fusible material will melt. This will loosen the connection between the first wire 20 and the piece of wire 38 and thereby sever the electrical connection between wires 20 and 20'.

It will be understood that the material of the fusible body 22 will normally be selected so that its melting temperature corresponds to the desired threshold temperature at which the circuit breaking function of the safety device is to be triggered. However, to take into account very short lag in response (due to the time required for the fusible body to heat up), the fusible material may have a melting point slightly lower than the threshold temperature.

Although metal alloys are preferred, such as e.g. woods metal, the fusible body 22 may also be made from pure metals or any materials with a high electrical conductivity, and also preferably reasonable strength.

The housing 18 is made of a material having a melting temperature higher than the service temperature of the device itself, and preferably substantially higher than the threshold temperature (i.e. melting temperature of the fusible body 22). Depending on the applications, and mainly on the service temperatures, the housing may consist of pure metal, alloys (in particular steel alloys), or ceramics material.

As shown in the embodiment of Figures 1 and 2, to ensure a rapid and efficient break of the connection between the first wire 20 and the second wire 20', the piece of wire 38 can be provided with a weight 40. Therefore, as the fusible body 22 melts, the weight 40, under the force of gravity, pulls the piece of wire 38 away from the first wire 20.

The housing 18 is preferably sealed to prevent the entry of a surrounding medium. Therefore, the wires 20, 20' are guided through the housing wall through an insulator (not shown). The insulator, but also the housing 18, is preferably designed to withstand the pressures exerted by the surrounding medium. The inner chamber 19 of the housing is e.g. filled with helium.

For example, for application in a nuclear reactor, the housing may have an outer diameter of from 8-12 mm depending on reactor type. The housing wall thickness should be as small as possible, taking into account, however, the manufacturing conditions and the fact that it has to withstand an outer pressure of about 7 bars in a Pb or Pb/Bi cooled reactor, up to 70 bars in a gas-cooled fast reactor and up to 150 bars in a PWR. A steel housing may thus preferably have a thickness between 1 and 2 mm.

In order to detect a leak in the housing 18, the device 10 is advantageously provided with leak detecting means. When the device 10 is to be used in an electrically conductive medium (fluid), the leak detecting means may simply comprise two electric sensing wires (not shown) that are guided through the housing 18 via the insulator through which wires 20 and 20' are already guided. The wires are connected to a circuit featuring a power supply (not shown) and a visible and/or audible alarm (not shown) in such a way that in normal operation of the device 10, i.e. without leak, the circuit is open and the alarm is not active (not supplied with current). Should some of the surrounding fluid 16 enter the housing 18 via a hole or the like, it would fill up the housing and, due to the electrical conductivity of the medium, provide a permanent contact between the two wires 20, 20' and thus permanently supply the accelerator 14 with current or not release the control rods for a nuclear reactor.

In such a case, the presence of electrically conductive fluid in the housing would also provide a contact between the two sensing wires of the leak detection means, and thus trigger an alarm. The presence of electrically conductive fluid in the housing 18 can alternately be sensed by monitoring a change in the resistance measured between the two sensing wires, the presence of fluid being indicated by a low electrical resistance. Additionally, the leak detecting means are not only designed to inform the operator of the leak, but also to take a predetermined action (e.g. preventive action such as switching off the entire system and to replace the temperature sensitive device by a new one).

The heat collecting structure 24 may comprise a plurality of fins 42 arranged in the stream of coolant fluid 16 to be monitored in such as way that the coolant fluid is forced to flow in the space 44 between neighbouring fins 42. Such fins 42 considerably increase the contact surface 46 between the coolant fluid 16 and the heat collecting structure 24. Thereby improving heat pickup from the coolant fluid 16. If the coolant fluid 16 is a running liquid, the fins 42 are of lesser importance because the heat transfer between the running liquid and the heat collecting structure 24 without fins is sufficient to warrant a rapid heat pickup and transfer to the fusible body 22.

If, on the other hand, the coolant fluid 16 is a gas or a stagnant liquid, the response of the heat collecting structure 24 to a change in temperature of the coolant fluid 16 is slower. The fins 42 are then of particular importance to warrant a rapid heat pickup and transfer to the fusible body 22 by increasing the contact surface 46

It should also be noted that, although the hollow housing 18 of the first embodiment is shown as a rectangular box, the shape of the hollow housing 18 is of no particular importance for the present invention and may be adapted to the particular application in which the device is to be integrated.

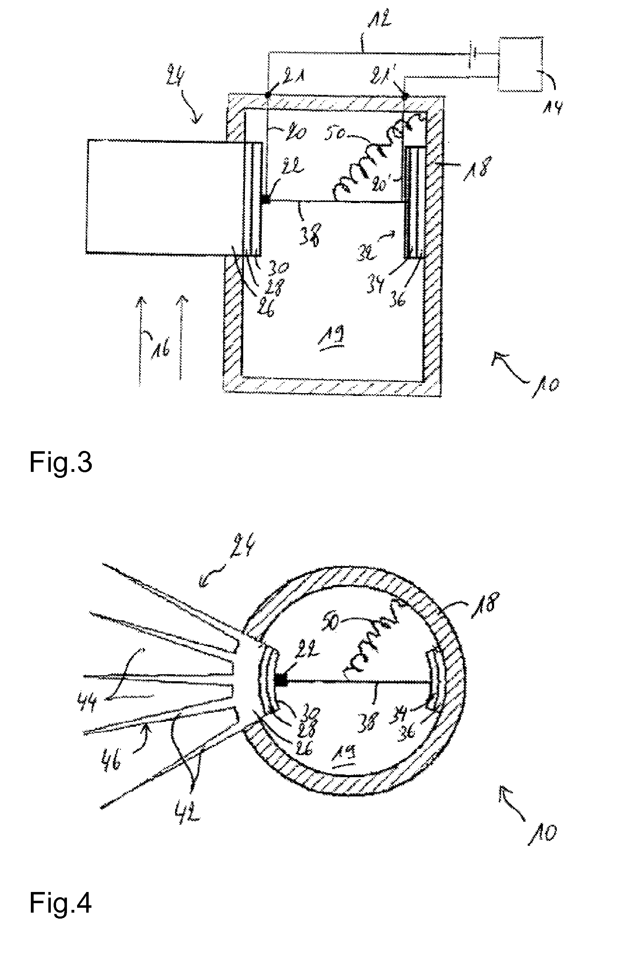

A second preferred embodiment of a temperature sensitive safety device 10 in accordance with the present invention is schematically illustrated in Fig.3 and Fig.4. Those features, which are identical or similar to the ones of the above-described first embodiment, carry identical reference numerals and will not be described in detail again.

According to the second embodiment, the hollow housing 18 is in the shape of a cylindrical box.

The fins 42 of the heat collecting structure 24 according to this embodiment extend from the hollow housing 18 radially outwards into the stream of coolant fluid 16 to be monitored.

As shown in the embodiment of Figures 3 and 4, to ensure a rapid and efficient break of the connection between the first wire 20 and the second wire 20', a spring 50 can be provided. Such a spring 50 would be connected with one end to the piece of wire 38 and with the other end to an inner wall of the housing 18 in such a way as to pull the piece of wire 38 away from the first wire 20 when the fusible body 22 melts. Contrary to the first embodiment, this solution does not rely on gravity to interrupt the electrical connection between wires 20 and 20'.

### Example 1

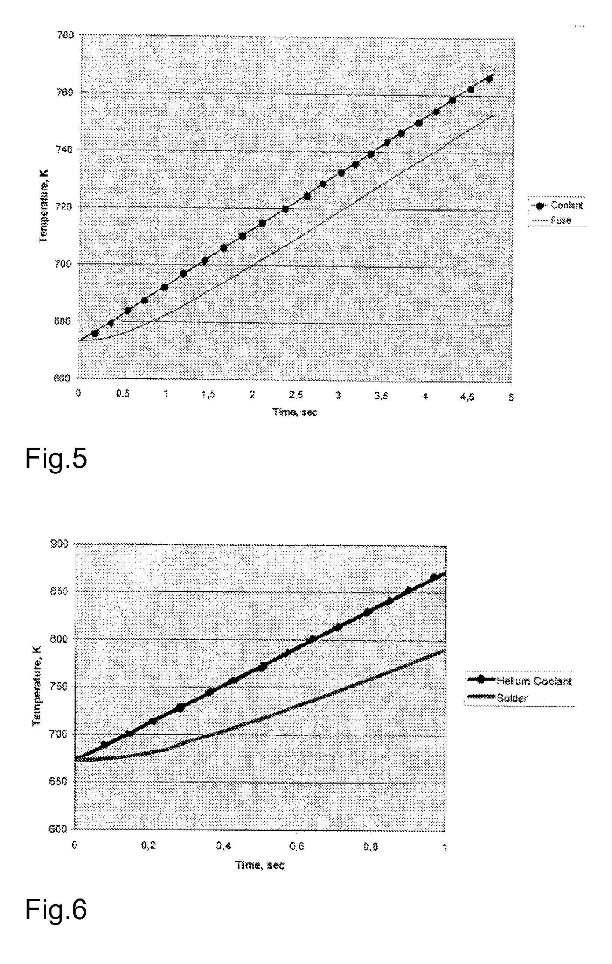

Figure 5 shows the temperature development of a fusible body in a He-coolant environment at 60 bar pressure. The coolant temperature is increasing by 20K per second; in this slow transient the temperature of the fusible body follows the coolant temperature closely. Silver was used as high electrically and thermally conducting material and diamond was used as low electrically and high thermally conducting material.

### Example 2

Figure 6 shows the temperature evolution of a fusible body in a He-coolant environment at 60 bar pressure. The coolant temperature increases by 200K per second. After one second the temperature of the fusible body has increased by 117.6K. Silver was used as high electrically and thermally conducting material and diamond was used as low electrically and high thermally conducting material.

### Example 3

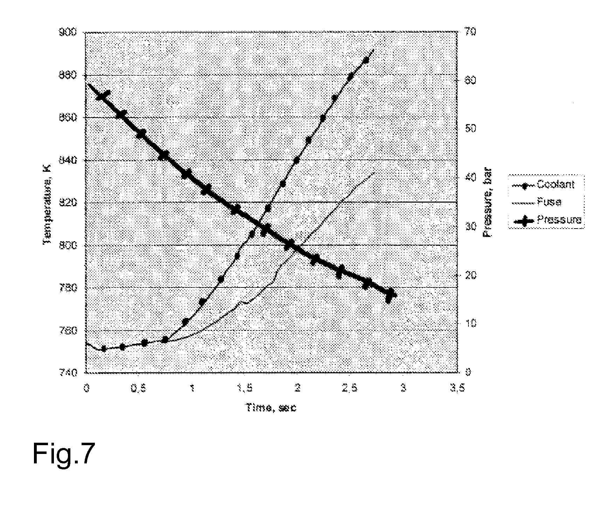

Figure 7 shows the temperature evolution of a fusible body in a He-coolant environment during a Loss-of-Coolant accident. Because of the coolant pressure decrease, the coolant temperature will increase. The pressure and velocity data are taken from PDS-XADS (Preliminary Design Study - experimental Accelerator Driven System) project. The calculations were performed on the He-cooled ADS system. The temperature of the fusible body has increased by 50K within 2.1 seconds after accident initiation. At that time the coolant temperature has increased 100K and the pressure has decreased to 24 bar. Silver was used as high electrically and thermally conducting material and diamond was used as low electrically conducting material.

Although the present temperature sensitive safety device is particularly well suited for applications in the nuclear field to interrupt a power supply in case the coolant reaches abnormal temperatures, it is also applicable in a variety of applications where a circuit line is to be interrupted in case the monitored medium reaches a predetermined temperature. In particular, the possible use of the safety device in a variety of media (liquids, aggregates, solids or gases) as well as its simplicity of construction and handling make it suitable for application in: chemical plants, steel making or other metal industries, and in electrical appliances, electrical motors and combustion engines.

### REFERENCE NUMERALS

- 10: temperature sensitive safety device
- 12: power supply line
- 14: electrically powered device
- 16: coolant fluid
- 18: hollow housing
- 19: chamber
- 20: first electrical wire
- 20': second electrical wire
- 21, 21': outer ends of the electrical wires
- 22: fusible body
- 24: heat collecting structure
- 26: first layer of heat collecting structure
- 28: second layer of heat collecting structure
- 30: third layer of heat collecting structure
- 32: support element
- 34: first layer of support element
- 36: second layer of support element
- 38: piece of wire
- 40: weight
- 42: fins
- 44: space
- 46: contact surface
- 50: spring

## Claims

1. A temperature sensitive safety device comprising:
a hollow housing;
two electric conductors guided through said housing;
a fusible body arranged inside said hollow housing, said fusible body being associated with said electric conductors and designed to normally provide an electrical connection between said electric conductors in said housing, and, in response to an increase of temperature above a predetermined threshold temperature, break the electrical connection between said two electric conductors,
**characterised by**
a heat collecting structure for transmitting heat from a medium to be monitored to said fusible body, said heat collecting structure comprising:
- a first layer arranged at least partially outside said hollow housing so as to be in contact with the medium to be monitored; said first layer being of a first material having high thermal conductivity;
- a second layer arranged inside said hollow housing; said second layer being of a second material being electrically insulating and having high thermal conductivity;
- a third layer arranged inside said hollow housing and carrying said fusible body; said third layer being of a third material having high thermal conductivity.

2. The safety device according to claim 1, wherein said first, second and/or third material has a melting point above said predetermined threshold temperature.

3. The safety device according to any of the previous claims, wherein said first and/or third material is chosen from the group comprising: aluminum, aluminum alloy, beryllium, beryllium oxide, silver, silver alloy, magnesium oxide, silicon carbide steel, Mo92, Ti, Ni, Zr, Cr.

4. The safety device according to any of the previous claims, wherein said third material is identical to said first material.

5. The safety device according to any of the previous claims, wherein said second material is chosen from the group comprising: diamond, beryllium oxide.

6. The safety device according to any of the previous claims, wherein said first layer comprises a plurality of fins extending into said medium to be monitored.

7. The safety device according to any of the previous claims, wherein said fusible body made of a material that melts when said predetermined threshold temperature is reached.

8. The safety device according to any of the previous claims, wherein said fusible body made of a material that comprises a mild explosive material that blows up at said predetermined threshold temperature.

9. The safety device according to any of claims 1 to 8, wherein said fusible body is made of an electrically conductive material bridging the ends of said two electrical conductors.

10. The safety device according to any of claims 1 to 8, wherein
a first of said two electric conductors is joined to said heat collecting structure by said fusible body; and
a second of said two electric conductors is joined to a support element arranged at a distance from said heat collecting structure, said second electric conductor being connected to said first conductor via a piece of electric wire.

11. The safety device according to claim 10, wherein said support element comprises:
- a first layer holding said second electric conductor and said piece of electric wire, said first layer being of a thermally insulating, fourth material; and
- a second layer connected to an interior wall of said hollow housing, said second layer being of an electrically insulating, fifth material,
wherein said fourth material may be chosen from the group comprising Hi-Por (highly porous cast engineering material) or aluminum oxide, and wherein said fifth material may be chosen from the group comprising diamond or beryllium oxide.

12. The safety device according to any of the previous claims, further comprising biasing means that tend to discontinue the electrical connection between said electrical conductors.

13. The safety device according to claim 12, wherein said biasing means is a weight or a spring connected to said second electric conductor or to said piece of electric conductor.

14. The safety device according to any of the previous claims, wherein said housing is made of a material having a melting temperature above said predetermined threshold temperature and substantially above the desired service temperature of said safety device.

15. The safety device according to any of the previous claims, wherein said housing is sealed to prevent any entry of surrounding medium.

16. The safety device according to claim 15, further comprising leak-detecting means for detecting a leak of medium to be monitored into said housing.

17. Use of a temperature sensitive device according to any of claims 1 to 16 in a nuclear reactor, the safety device being serially connected to an electric power supply of the electromagnets holding the control rods.

18. Use of a temperature sensitive safety device according to any one of claims 1 to 16 in an accelerator driven nuclear system, the safety device being connected in a power supply circuit of a particle beam source and placed at the outlet of the core.

19. Use of a temperature sensitive safety device according to any one of claims 1 to 16 as a temperature sensitive fuse in a nuclear reactor, an internal combustion engine, an electrical engine or appliance, an industrial machine or installation.
